# EUROPÄISCHE PATENTANMELDUNG

(11) **EP 3 243 867 A1**
(43) Veröffentlichungstag der Anmeldung: **15.11.2017**
(21) Anmeldenummer: 17171735.8
(22) Anmeldetag: 23.11.2010
(51) Int. Cl.: C08J 9/16, B29B 9/06, B29C 44/34

(54) **VERFAHREN ZUR HERSTELLUNG EINES PET-GRANULATS SOWIE PET-GRANULAT**

(30) Priorität: 24.11.2009 DE 102009054324
(62) Teilanmeldung aus: 10805192.1
(71) Anmelder: Sulzer Chemtech AG, 8404 Winterthur (CH)
(72) Erfinder: STRASSER, Jean, Paul, 52076 Aachen (DE)
(74) Vertreter: Manitz Finsterwald Patentanwälte PartmbB

(57) **Zusammenfassung**

Es wird ein Verfahren zur Herstellung eines Polyethylenterephthalat (PET)-Granulats, bei dem eine PET-Schmelze mit einem Treibmittel oder Treibmittelgemisch und gegebenenfalls Additiven vermischt und extrudiert wird. Das Verfahren kennzeichnet sich dadurch, dass das Gemisch über den Extruder einem ein Wasserbad umfassenden Unterwassergranulierer zugeführt und granuliert wird, wobei die Prozessparameter derart gewählt werden, dass das PET nach der Granulierung amorph sowie nicht oder allenfalls geringfügig aufgeschäumt ist. Als Ergebnis wird schäumbares Granulat erhalten, das aus mit einem Treibmittel oder einem Treibmittelgemisch begasten, amorphen und nicht oder kaum aufgeschäumten PET-Kugeln besteht. Die nicht oder kaum aufgeschäumten PET-Kugeln sind für die weitere Verarbeitung vorteilhaft. So können hiermit Formteile mit hoher Isotropie in Bezug auf Dichte und Struktur, insbesondere unter Vermeidung von Zwickelräumen hergestellt werden. Bei räumlicher Trennung von Granulatproduktion und Weiterverarbeitung sind insbesondere das geringe Volumen des Granulats für Transport und Lagerung von Vorteil.

## Beschreibung

Die Erfindung betrifft ein Verfahren zur Herstellung eines Polyethylenterephthalat (PET)-Granulats, bei dem eine PET-Schmelze mit einem Treibmittel oder Treibmittelgemisch und gegebenenfalls Additiven vermischt und extrudiert wird. Des Weiteren betrifft die Erfindung ein PET-Granulat.

PET eignet sich hervorragend für Recycling-Prozesse, weshalb neben erstmals erzeugtem PET auch Recycle-PET zur Herstellung mannigfaltiger Produkte verwendet werden kann.

Auf dem Markt spielen aus PET hergestellte Produkte eine große Rolle, insbesondere in der Getränkeindustrie und Verpackungsindustrie wo leichtgewichtige Flaschen und Verpackungsfolien benötigt werden, wird bevorzugt PET eingesetzt.

Im Falle des Recyclings werden PET-Flaschen und PET-Folien zerkleinert und das dabei entstehende Granulat zur Herstellung neuer Flaschen, Platten oder Folien verwendet. Das recycelte Material kann aber auch zur Herstellung anderer KunststoffTeile dienen, zum Beispiel PET in Form von geschäumten Platten. Aufgrund der geringen Dichte des bereits geschäumten PET-Materials nimmt das bekannte Granulat ein verhältnismäßig großes spezifisches Volumen ein, weshalb Lagerung und Transport kostenintensiv sind.

Aus der US 6,306,921 B1 ist ein Verfahren zur Erzeugung eines Polyester-Granulats, z.B. eines PET-Granulats, offenbart, das jedoch zumindest vorgeschäumt ist. Das Polyester wird mittels eines Extruders geschäumt und der geschäumte Strang einem Granulierer zugeführt, so dass das Ergebnis geschäumte Polyester-Teile sind, die zylinderförmig sind oder auch andere Formen, z.B. eine Buchstaben-Form, annehmen können. Die Form wird dabei durch die Form der Öffnungen im Extruderkopf vorgegeben. Gemäß diesem Stand der Technik soll das Granulat soll eine Kristallisationsrate von weniger als 15%, bevorzugt weniger als 10 % aufweisen. Vorgeschäumtes zylinderförmiges oder gar unregelmäßige Formen aufweisendes Granulat kann bei der weiteren Verarbeitung in einem Formteilautomaten nachteilige Aussparungen oder Lücken hinterlassen, so dass das geformte Teil nicht vollständig raumausfüllend ist oder zumindest deutliche Dichteschwankungen aufweist. Das zumindest vorgeschäumte Material weist immer noch eine relativ hohes Volumen/Gewicht-Verhältnis auf, so dass sein Transport volumen- und damit kostenintensiv ist. Auch die noch relativ hohe Kristallisationsrate ist nachteilig aufgrund der deshalb benötigten hohen Temperaturen für die formverändernde weitere Verarbeitung.

Aus der WO 94/12564 ist ein Verfahren zur Herstellung von geschäumtem PET mit hoher Schmelzfestigkeit bekannt, bei dem die Polymerschmelze über einen Extruder geführt wird. Hierbei geht es insbesondere um das Erreichen bestimmter Werte für die Schmelzfestigkeit und erhöhte Kristallisationsraten. So stellt die WO 94/1256 heraus, dass konventionelles PET eine geringe Schmelzfestigkeit hat, weshalb geschmolzenes PET leicht nach dem Schäumen kollabiert. Auch die mechanischen Eigenschaften des geschäumten PET können z.B. aufgrund großer Unterschiede in den Zellgrößen und den Wanddicken nachteilig sein. Trotz des großen Marktpotentials sei die Produktion von geschäumtem PET insbesondere auch durch die Komplexität der Herstellung gering. Es ist offenbart, das Polymer in eine Form zu extrudieren, in der es durch Schäumen seine endgültige Form erhält. Ein Granulierer ist nicht ausdrücklich offenbart.

In Bezug auf andere Polymere als PET sind auch schäumbare Granulate sowie Verfahren zu ihrer Herstellung bekannt. So offenbart die DE 10 2007 050 681 A1 ein Verfahren sowie eine Vorrichtung zur Herstellung eines Polymergranulats, bei dem das Polymer vor und hinter einer Schneckenvorrichtung gekühlt, in der Schneckenvorrichtung mit einem Treibmittel und mit Additiven versetzt und nach dem zweiten Kühlschritt einer Granuliereinrichtung zugeführt wird, bei der es sich auch um einen Unterwassergranulierer handeln kann. Als mögliche Polymere sind namentlich Polystyrol, Polyethylen, Polypropylen und Mischungen hiervon sowie Polyactide und Celluloseacetate genannt. PET, welches eine deutlich höhere Verarbeitungstemperatur verlangt als die in diesem Stand der Technik genannten Polymere, ist als mögliche Alternative nicht genannt.

Aus der EP 1 517 947 B1 ist schließlich ein Verfahren zur Herstellung eines schäumbaren Polystyrol-Granulats offenbart, bei dem das Polystyrol in einem Extruder mit Treibmittel und Additiven versetzt, gekühlt und einem Unterwassergranulierer zugeführt wird.

Es ist nun Aufgabe der Erfindung, ein Verfahren der Eingangs genannten Art sowie ein PET-Granulat zur Verfügung zu stellen, mit dem PET in für Transport, Lagerung und Verarbeitung verbesserter Form bereitgestellt wird

Bei einem Verfahren der eingangs genannten Art wird die Aufgabe mit den kennzeichnenden Merkmalen des Anspruchs 1 gelöst.

Hierdurch wird erstmals ein schäumbares PET-Granulat zur Verfügung gestellt. Schäumbar bedeutet in diesem Zusammenhang, dass das Granulat keine oder allenfalls geringfügige Verschäumung, also jedenfalls keinen regelrechten Schäum- oder Vorschäumprozess erfahren hat. Eine Verschäumung des Granulats wird vorliegend als geringfügig betrachtet, wenn sein Raumgewicht hiernach noch mindestens 500 kg/m³, bevorzugt mindestens 750 kg/m³, weiter bevorzugt mindestens 800 kg/m³, beträgt. Granulate der hier betroffenen Art weisen einen Durchmesser im Bereich von 0,5 bis 2,5 mm auf.

Dies hat zur Folge, dass das Granulat ein vergleichsweise hohes spezifisches Gewicht und damit ein geringes spezifisches Volumen aufweist. Hierdurch können erhebliche Transport- und Lagerkapazitäten eingespart werden. Das Granulat kann für Folgeprozesse, wie Vorschäumen oder Formteilherstellung, auch in bereits existierenden Anlagen des Standes der Technik, insbesondere auch in solchen für die Verarbeitung von expandierbarem Polystyrol (EPS) eingesetzt werden.

Zu den Prozessparametern zählen insbesondere die Temperaturen des Wasserbades und der Ausgangsstoffe, d. h. des PET, des Treibmittels oder des Treibmittelgemisches und der Additive, oder des jeweils gegebenen Gemisches der Ausgangsstoffe, die Art, Mengen und Mengenverhältnisse der Ausgangsstoffe und die Drücke, insbesondere auch im Wasserbad.

Das erfindungsgemäße Verfahren kann auch so ausgeführt werden, dass die Temperatur und der Druck des Wasserbades im Unterwassergranulierer derart gewählt werden, dass das Granulat im Wesentlichen eine Kugelform einnimmt, woraus wiederum eine vollständige Raumausfüllung mit möglichst gleichmäßiger Dichte im fertigen Formkörper ohne Zwickelräume erreicht werden kann. Dabei kann vor dem Schäumen in einem Formteilautomaten ein Vorschäumprozess vorgesehen werden.

Das erfindungsgemäße Verfahren kann auch so ausgeführt werden, dass die Kühlung des Gemischs im Extruder erfolgt.

Es kann auch vorteilhaft sein, als Extruder einen Doppelschneckenextruder einzusetzen.

In Bezug auf das PET-Granulat wird die vorgenannte Aufgabe dadurch gelöst, dass das Granulat aus mit einem Treibmittel oder einem Treibmittelgemisch begasten, amorphen und nicht oder allenfalls geringfügig aufgeschäumten PET-Kugeln besteht.

Der amorphe Aufbau und die kugelförmige Struktur des Granulats haben für die weitere Verarbeitung deutliche Vorteile: Die Kugelform erleichtert deutlich die Herstellung von Formteilen ohne Zwickelräume sowie mit möglichst gleichmäßiger Dichte und hoher Isotropie. Die Amorphie des Granulatmaterials bewirkt, dass die PET-Kugeln bei vorteilhaft geringen Erweichungstemperaturen von etwa 110°C bis 125°C vorgeschäumt werden können. Zudem sind die Verschweißtemperaturen des Materials, auch im geschäumten Zustand, gering. Unter amorph wird verstanden, dass das PET im Granulat ohne messbare Kristallinität ist oder einen Kristallisationsgrad unter 10%, vorteilhaft unter 5% aufweist.

Im Folgenden wird eine vorteilhafte Art der Ausführung des erfindungsgemäßen Verfahrens anhand eines Beispiels dargestellt.

Einem Extruder wird, bevorzugt über eine gravimetrische Dosierung, in einer Füllzone PET-Ausgangsmaterial, optional zusammen mit Additiven, zugeführt. Dieses kann in Form eines bereits bestehenden, z. B. Raumtemperatur aufweisenden Granulats zum Beispiel aus zerkleinertem Flaschen-PET erfolgen. Das Ausgangsmaterial kann aber auch aus einem Polymerisationsreaktor stammen. Auch Ausschussmaterial aus vorherigen Granulatproduktionen kann verwendet werden. In einer Aufschmelzzone wird das Material bei etwa 300°C aufgeschmolzen. Diese Temperatur kann auch in der Füllzone herrschen. Ein Treibmittel oder Treibmittelgemisch wird mittels einer Direktbegasung bei ebenfalls etwa 300°C eingespritzt. Als Treibmittel kommen z.B. CO₂, Propan, Pentan, n-Pentan, cyclo-Pentan; Iso-Butan, HFCKW 152A oder Mischungen hiervon in einer Konzentration von 1,5 Gew.-% bis 12 Gew.-% in Frage. In einer Mischzone werden ggf. notwendige (weitere) Additive, zum Beispiel Kettenverlängerer, bei etwa 280°C eingemischt. Als Kettenverlängerer kann z.B. PET MASSPET 2834NF von POINTPLASTIC srl in einer Konzentration von 1 Gew.-% bis 4,5 Gew.-%, vorzugsweise 1,5 Gew.-% bis 2,5 Gew.-% eingesetzt werden. Über Förder- und Kühlzonen wird das PET-Treibmittel-Gemisch bei 230°C bis 260°C, bevorzugt bei 238°C bis 245°C, einem Unterwassergranulierer zugeführt. Die Kühlung kann dabei mittels eines Kühlmittels, z.B. Öl, in den letzten dynamischen Zonen des Extruders selbst und/oder in vor- und/oder nachgeschalteten dynamischen oder statischen Schmelzenkühlern erfolgen.

Nach seinem Austritt aus dem Extruder und ggf. dem Kühler wird das PET einer Unterwassergranulierung zugeführt. Das zugehörige Wasserbad weist eine Temperatur von 25°C bis 45°C auf, wodurch das austretende Gemisch abgeschreckt wird. Der Druck beträgt etwa 3 bis 10 bar. Infolge der Abschreckung bleibt das PET im gewünschten amorphen Zustand. Der hohe Wasserdruck verhindert zusammen mit der Temperatur des Wasserbades ein Aufschäumen des Granulats.

Druck und Temperatur des Wasserbades sind so eingestellt, dass begaste, aber nicht geschäumte PET-Granulate mit Durchmessern von 0,5 mm bis 2,5 mm, bevorzugt von 0,8 mm bis 1,2 mm erzeugt werden.

Das auf diese Weise hergestellte PET-Granulat kann dann für die Weiterverarbeitung am Verarbeitungsort vorgeschäumt werden, wodurch man expandierte PET-Beads erhält. Die vorgeschäumten Beads können dann in einem Formteilautomaten weiter verarbeitet werden. In einem Nachschäumprozess werden dabei sämtliche Lücken zwischen den Beads zuverlässig geschlossen, so dass die fertigen Formteile im Wesentlichen lückenlos sind. Des Weiteren kann auf diese Weise eine gleichmäßige isotrope Zellstruktur über das gesamte Formteil erreicht werden.

Die Trennung von Granulatproduktion und Verschäumung bringt einen erheblichen Kostenvorteil für Transport und Lagerung mit sich.

## Patentansprüche

1. PET-Granulat, hergestellt durch ein Verfahren zur Herstellung eines Polyethylenterephthalat (PET)-Granulats, das nach der Granulierung amorph mit einem Kristallisationsgrad unter 10 % vorliegt, bei dem eine PET-Schmelze mit einem Treibmittel oder Treibmittelgemisch und gegebenenfalls Additiven vermischt und extrudiert wird, wobei das Gemisch über den Extruder einem ein Wasserbad umfassenden Unterwassergranulierer zugeführt und granuliert wird, wobei der Druck im Wasserbad 3 bis 10 bar und seine Temperatur 25 °C bis 45 °C beträgt, so dass das PET nach der Granulierung mit einem Raumgewicht von mindestens 500 kg/m³ vorliegt, wobei das Granulat aus mit einem Treibmittel oder einem Treibmittelgemisch begasten, amorphen und nicht oder allenfalls geringfügig aufgeschäumten PET-Kugeln besteht.

2. PET-Granulat nach Anspruch 1 , **dadurch gekennzeichnet, dass** die Temperatur und der Druck des Wasserbades im Unterwassergranulierer derart gewählt werden, dass das Granulat im Wesentlichen eine Kugelform einnimmt.

3. PET-Granulat nach Anspruch 1 oder 2, **dadurch gekennzeichnet, dass** das Gemisch im Wasserbad abgeschreckt wird.

4. PET-Granulat nach einem der vorhergehenden Ansprüche, **dadurch gekennzeichnet, dass** die Kühlung des Gemischs im Extruder erfolgt und/oder über nachgeschaltete statische oder dynamische Schmelzenkühler erfolgt.

5. PET-Granulat nach einem der vorhergehenden Ansprüche, **dadurch gekennzeichnet, dass** der Extruder ein Doppelschneckenextruder ist.
